(19) Europäisches Patentamt
European Patent Office
Office européen des brevets

(11) **EP 2 434 884 B1**

(12) **EUROPÄISCHE PATENTSCHRIFT**

(45) Veröffentlichungstag und Bekanntmachung des Hinweises auf die Patenterteilung:
**31.07.2013 Patentblatt 2013/31**

(21) Anmeldenummer: **10722304.2**

(22) Anmeldetag: **19.05.2010**

(51) Int Cl.:
*A01N 41/10* (2006.01)          *A01P 13/00* (2006.01)

(86) Internationale Anmeldenummer:
**PCT/EP2010/003065**

(87) Internationale Veröffentlichungsnummer:
**WO 2010/136146 (02.12.2010 Gazette 2010/48)**

(54) **SYNERGISTISCHE HERBIZID-KOMBINATIONEN ENTHALTEND TEMBOTRIONE**

SYNERGETIC HERBICIDE COMBINATIONS CONTAINING TEMBOTRIONE

COMBINAISONS D'HERBICIDES SYNERGÉTIQUES CONTENANT DU TEMBOTRIONE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **27.05.2009 EP 09007061**

(43) Veröffentlichungstag der Anmeldung:
**04.04.2012 Patentblatt 2012/14**

(60) Teilanmeldung:
**12173625.0 / 2 526 770**

(73) Patentinhaber: **Bayer CropScience AG**
**40789 Monheim (DE)**

(72) Erfinder:
• GATZWEILER, Elmar
  63654 Büdingen (DE)
• TRABOLD, Klaus
  69123 Heidelberg (DE)
• HACKER, Erwin
  65239 Hochheim (DE)
• ZIEMER, Frank
  65830 Kriftel (DE)
• ANGERMANN, Alfred
  65830 Kriftel (DE)

(56) Entgegenhaltungen:
**WO-A-03/047340     WO-A-2006/097322**

**Beschreibung**

Die Erfindung betrifft das technische Gebiet der Pflanzenschutzmittel, die gegen unerwünschten Pflanzenwuchs eingesetzt werden können und als Wirkstoffe eine Kombination von mindestens zwei Herbiziden enthalten.

Spezieller betrifft sie Herbizid-Kombinationen für den Einsatz in Reis, Mais und Zuckerrohr, welche den Wirkstoff tembotrione in Kombination mit mindestens einem weiteren Herbizid enthalten.

WO 03/047340 und WO 2007/006415 beschreiben herbizide Mittel enthaltend tembotrione. Die Anwendung der aus diesen Schriften bekannten herbiziden Mittel ist jedoch in der Praxis häufig mit Nachteilen verbunden. So ist die herbizide Wirksamkeit nicht immer ausreichend, oder bei ausreichender herbizider Wirksamkeit werden unerwünschte Schädigungen der Reispflanzen beobachtet.

Aufgabe der vorliegenden Erfindung ist die Bereitstellung von weiteren Herbizid-Kombinationen.

Ein Gegenstand der Erfindung sind Herbizid-Kombinationen, gekennzeichnet durch einen synergistisch wirksamen Gehalt an

A) tembotrione sowie dessen landwirtschaftlich üblichen Salze [Komponente (A)] und
B) der Verbindung [Komponente (B)] amicarbazone.

Im Folgenden sind die Begriffe "Komponente (A)" und "Herbizid (A)" als gleichbedeutend zu verstehen. Analoges gilt für den Begriff "Komponente (B)".

Das Herbizid tembotrione ist beispielsweise aus EP 1 117 639 B1 und von der Website "http://www.alanwood.net/pesticides/index.html" bekannt.
Die chemischen Strukturen der anderen oben mit ihren "common names" genannten Wirkstoffe sind beispielsweise aus "The Pesticide Manual" 14. Auflage, 2006, British Crop Protection Council, und von der Website "http://www.alanwood.net/pesticides/index.html" bekannt. Wenn im Rahmen dieser Beschreibung die Kurzform des "common name" eines Wirkstoffs verwendet wird, so sind damit jeweils alle gängigen Derivate, wie die Ester und Salze, und Isomere, insbesondere optische Isomere umfasst, insbesondere die handelsübliche Form bzw. Formen. Wird mit dem "common name" ein Ester oder Salz bezeichnet, so sind damit auch jeweils alle anderen gängigen Derivate wie andere Ester und Salze, die freien Säuren und Neutralverbindungen, und Isomere, insbesondere optische Isomere umfasst, insbesondere die handelsübliche Form bzw. Formen. Die angegebenen chemischen Verbindungsnamen bezeichnen zumindest eine der von dem "common name" umfaßten Verbindungen, häufig eine bevorzugte Verbindung.

Die erfindungsgemäßen Herbizid-Kombinationen weisen in bevorzugter Ausführungsform synergistische Wirkungen bei gleichzeitiger hoher Verträglichkeit gegenüber Kulturpflanzen wie Getreide, Soja, Zuckerrohr, Mais und Reis, insbesondere Zuckerrohr, Mais und Reis, auf. Die synergistischen Wirkungen und die hohe Verträglichkeit gegenüber Kulturpflanzen können z.B. bei gemeinsamer Ausbringung der Komponenten (A) und (B) beobachtet werden, sie können jedoch häufig auch bei zeitlich versetzter Anwendung (Splitting) festgestellt werden. Möglich ist auch die Anwendung der einzelnen Herbizide in mehreren Portionen (Sequenzanwendung), z. B. Anwendungen im Vorauflauf, gefolgt von Nachauflauf-Applikationen oder frühe Nachauflauf-anwendungen, gefolgt von Applikationen im mittleren oder späten Nachauflauf.
Bevorzugt ist dabei die gemeinsame oder die zeitnahe Anwendung der Wirkstoffe der erfindungsgemäßen Herbizid-Kombination.

Die synergistischen Effekte erlauben eine Reduktion der Aufwandmengen der Einzelwirkstoffe, eine höhere Wirkungsstärke bei gleicher Aufwandmenge, die Kontrolle bislang nicht erfasster Arten (Lücken), eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Erfindungsgemäß umfasst sind auch solche Herbizid-Kombinationen, die neben den Komponenten (A) und (B) noch ein oder mehrere weitere agrochemische Wirkstoffe anderer Struktur enthalten, wie Herbizide, Insektizide, Fungizide oder Safener. Für solche Herbizid-Kombinationen gelten die vor- und nachstehend erläuterten bevorzugten Bedingungen ebenfalls.

Ebenso erfindungsgemäß umfasst sind auch solche Herbizid-Kombinationen, die neben den Komponenten (A) und (B) noch Düngenmittel, wie Ammoniumsulfat, Ammoniumnitrat, Harnstoff, Kaliumnitrat und Mischungen davon, enthalten.
Für solche Herbizid-Kombinationen gelten die vor- und nachstehend erläuterten bevorzugten Bedingungen ebenfalls.

Weiterhin erfindungsgemäß umfasst sind auch solche Herbizid-Kombinationen, die neben den Komponenten (A) und (B) noch Adjuvantien, wie Emulgatoren, Dispergatoren, mineralische und pflanzliche Öle und Mischungen davon, enthalten. Für solche Herbizid-Kombinationen gelten die vor- und nachstehend erläuterten bevorzugten Bedingungen ebenfalls.

In den erfindungsgemäßen Herbizid-Kombinationen benötigt man in der Regel Aufwandmengen im Bereich von 1 bis 2000 g, vorzugsweise 10 bis 500 g Aktivsubstanz pro Hektar (ai/ha) der Komponente (A) und 1 bis 2000 g, vorzugsweise 1 bis 500 g der Komponente (B).

Die Gewichtsverhältnisse der einzusetzenden Komponenten (A) zu (B) können in weiten Bereichen von 1: 2000 bis 2000:1 variiert werden. Vorzugsweise ist das Gewichtsverhältnis im Bereich von 1:50 bis 500:1, insbesondere im Bereich von 1:20 bis 50:1. Optimale Gewichtsverhältnisse können vom jeweiligen Applikationsgebiet, Unkrautspektrum und der eingesetzten Wirkstoffkombination abhängen und in Vorversuchen bestimmt werden.

Die erfindungsgemäßen Herbizid-Kombinationen sind hervorragend geeignet zur selektiven Bekämpfung von Schadpflanzen in Kulturen wie Getreide, Soja, Zuckerrohr, Mais und Reis, insbesondere Zuckerrohr, Mais und Reis.

Die erfindungsgemäßen Herbizid-Kombinationen können in allen Applikationsarten, die für Reis-Herbizide üblich sind, eingesetzt werden. Besonders vorteilhaft werden sie in der Spritzapplikation und in der "submerged application" eingesetzt. Bei der sogenannten "submerged application" bedeckt das Anstauwasser schon zum Zeitpunkt der Applikation die Erde um bis zu 30mm. Die erfindungsgemäßen Herbizid-Kombinationen werden dann direkt, z.B. in Form eines Granulats in das Anstauwasser gegeben. Weltweit wird die Spritzapplikation vorwiegend bei gesätem Reis ("seeded rice") und die sogenannte "submerged application" vorwiegend bei verpflanztem Reis ("transplanted rice") eingesetzt.

Die erfindungsgemäßen Herbizid-Kombinationen erfassen ein breites Unkrautspektrum. Sie eignen sich beispielsweise zur Bekämpfung von annuellen und perennierenden Schadpflanzen wie beispielsweise aus den Gattungen Aegilops, Agropyron, Agrostis, Alopecurus, Apera, Avena, Brachiaria, Bromus, Cenchrus, Commelina, Cynodon, Cyperus, Dactyloctenium, Digitaria, Echinochloa, Eleocharis, Eleusine, Eragrostis, Eriochloa, Festuca, Fimbristylis, Heteranthera, Imperata, Ischaemum, Leptochloa, Lolium, Monochoria, Panicum, Paspalum, Phalaris, Phleum, Poa, Rottboellia, Sagittaria, Scirpus, Setaria, Sorghum, Abutilon, Amaranthus, Ambrosia, Anoda, Anthemis, Aphanes, Artemisia, Atriplex, Bellis, Bidens, Capsella, Carduus, Cassia, Centaurea, Chenopodium, Cirsium, Convolvulus, Datura, Desmodium, Emex, Erysimum, Euphorbia, Galeopsis, Galinsoga, Galium, Hibiscus, Ipomoea, Kochia, Lamium, Lepidium, Lindern, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Solanum, Sonchus, Sphenoclea, Stellaria, Taraxacum, Thlaspi, Trifolium, Urtica, Veronica, Viola, Xanthium.

Aufgrund ihrer herbiziden Eigenschaften können die Herbizid-Kombinationen auch zur Bekämpfung von Schadpflanzen in Kulturen von gentechnisch oder durch konventionelle Mutagenese veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Emteguts bekannt.

Bevorzugt bezüglich transgener Kulturen ist die Anwendung der erfindungsgemäßen Herbizid-Kombinationen in wirtschaftlich bedeutenden transgenen Kulturen von Nutz- und Zierpflanzen, z. B. von Getreide wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten.

Vorzugsweise können die erfindungsgemäßen Herbizid-Kombinationen als Herbizide in Nutzpflanzenkulturen eingesetzt werden, welche gegenüber den phytotoxischen Wirkungen der Herbizide resistent sind bzw. gentechnisch resistent gemacht worden sind, insbesondere solcher von Reis.

Die erfindungsgemäßen Herbizid-Kombinationen zeichnen sich auch dadurch aus, daß die in den Kombinationen verwendeten und wirksamen Dosierungen der Komponenten (A) und (B) gegenüber einer Einzeldosierung verringert sind, so daß eine Reduzierung der nötigen Aufwandmengen der Wirkstoffe ermöglicht wird.

Gegenstand der Erfindung ist auch ein Verfahren zur Bekämpfung von unerwünschtem Pflanzenwuchs, dadurch gekennzeichnet, daß man ein oder mehrere Herbizide (A) mit einem oder mehreren Herbiziden (B) auf die Schadpflanzen, Pflanzenteile davon oder die Anbaufläche appliziert.

Bei der gemeinsamen Anwendung von Herbiziden des Typs (A) und (B) treten überadditive (= synergistische) Effekte auf. Dabei ist die Wirkung in den Kombinationen stärker als die zu erwartende Summe der Wirkungen der eingesetzten Einzelherbizide und der Wirkung des jeweiligen einzelnen Herbizids (A) und (B). Die synergistischen Effekte erlauben eine Reduzierung der Aufwandmenge, die Bekämpfung eines breiteren Spektrums von Unkräutern und Ungräsem, einen schnelleren Einsatz der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Diese Eigenschaften sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Die erfindungsgemäßen Herbizid-Kombinationen können sowohl als Mischformulierungen der Komponenten (A) und (B), gegebenenfalls mit weiteren üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Komponenten (A) und (B) können auf verschiedene Arten formuliert werden, je nachdem welche biologischen und/oder chemisch-physikalischen Parameter vorgegeben sind. Als allgemeine Formulierungsmöglichkeiten kommen beispielsweise in Frage: Spritzpulver (WP), emulgierbare Konzentrate (EC), wäßrige Lösungen (SL), Emulsionen (EW) wie Öl-in-Wasser- und Wasser-in-Öl-Emulsionen, versprühbare Lösungen oder Emulsionen, Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formulierungen, Mikrokapseln oder Wachse.

Die einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticides Formulations", Marcel Dekker N.Y., 1973; K. Martens, "Spray Drying Handbook", 3rd Ed. 1979, G. Goodwin Ltd. London. Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridgewood N.J.; Sisley and Wood, "Encyclopedia of Surface Active Egents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Safenem, Düngemitteln und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Alkansulfonate oder Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach Verfahren wie Sprühtrocknung, Wirbelbett-Granulierung, Teller-Granulierung, Mischung mit Hochgeschwindigkeitsmischem und Extrusion ohne festes Inertmaterial hergestellt.

Die agrochemischen Zubereitungen enthalten in der Regel 0,1 bis 99 Gewichtsprozent, insbesondere 0,2 bis 95 Gew.-%, der Komponenten (A) und (B), wobei je nach Formulierungsart folgende Konzentrationen üblich sind: In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%, betragen. Staubförmige Formulierungen enthalten meistens 5 bis 20 Gew.-% an Wirkstoff, versprühbare Lösungen etwa 0,2 bis 25 Gew.-% Wirkstoff. Bei Granulaten wie dispergierbaren Granulaten hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 10 und 90 Gew.-%. Daneben enthalten die genannten Wirkstoffformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Herbizid-Kombinationen können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden.

Eine Möglichkeit der Anwendung ist die gemeinsame Ausbringung der Herbizid-Kombinationen in Form von Tankmischungen, wobei die optimal formulierten konzentrierten Formulierungen der Komponenten gemeinsam im Tank mit Wasser gemischt und die erhaltene Spritzbrühe ausgebracht wird.

Eine gemeinsame herbizide Formulierung der erfindungsgemäßen Herbizid-Kombinationen an Komponenten (A) und (B) hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

A. Formulierungsbeispiele

a) Ein Stäubemittel wird erhalten, indem man 10 Gew.-Teile von Komponente (A) oder (B) oder eines Gemischs davon und 90 Gew.-Teile Talkum als Inertstoff mischt und in einer Schlagmühle zerkleinert.

b) Ein in Wasser leicht dispergierbares, benetzbares Pulver wird erhalten, indem man 25 Gew.-Teile von Komponente (A) oder (B) oder eines Gemischs davon, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile von Komponente (A) oder (B) oder eines Gemischs davon mit 6 Gew.-Teilen Alkylphenolpolyglykolether (Triton X 207), 3 Gew.-Teilen Isotridecanolpolyglykolether (8 EO) und 71 Gew.-Teilen paraffinischem Mineralöl (Siedebereich z.B. ca. 255 bis 277° C) mischt und in einer Reibkugelmühle auf eine Feinheit von unter 5 Mikron vermahlt.

d) Ein emulgierbares Konzentrat wird erhalten aus 15 Gew.-Teilen von Komponente (A) oder (B) oder eines Gemischs davon, 75 Gew.-Teilen Cyclohexanon als Lösemittel und 10 Gew.-Teilen oxethyliertem Nonylphenol als Emulgator.

e) Ein in Wasser dispergierbares Granulat wird erhalten indem man
75 Gew.-Teile von Komponente (A) oder (B) oder eines Gemischs davon,
10 Gew.-Teile ligninsulfonsaures Calcium,
5 Gew.-Teile Natriumlaurylsulfat, 3 Gew.-Teile Polyvinylalkohol und
7 Gew.-Teile Kaolin
mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man
25 Gew.-Teile von Komponente (A) oder (B) oder eines Gemischs davon,
5 Gew.-Teile 2,2'-dinaphthylmethan-6,6'-disulfonsaures Natrium,
2 Gew.-Teile oleoylmethyltaurinsaures Natrium,
1 Gew.-Teil Polyvinylalkohol,
17 Gew.-Teile Calciumcarbonat und
50 Gew.-Teile Wasser

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

B. Biologische Beispiele

1. Unkrautwirkung im Vorauflauf

Samen bzw. Wurzelstücke von mono- und dikotylen Unkrautpflanzen werden in Töpfen in sandiger Lehmerde ausgelegt und mit Erde abgedeckt. Im Falle der Spritzapplikation werden die in Form von konzentrierten wäßrigen Lösungen, benetzbaren Pulvern oder Emulsionskonzentraten formulierten Mittel dann als wäßrige Lösung, Suspension bzw. Emulsion mit einer Wasseraufwandmenge von umgerechnet 600 bis 800 l/ha in unterschiedlichen Dosierungen auf die Oberfläche der Abdeckerde appliziert. Unmittelbar bis einige Tage nach der Applikation werden die Versuchsgefässe um bis zu 30mm über die Erdoberfläche mit Wasser angestaut. Im Falle der Wasserapplikation ("submerged application") hingegen ist die Erde im geschlossenen Versuchsgefäss zum Zeitpunkt der Applikation schon mit dem Anstauwasser bis zu 30mm bedeckt. Die formulierten Wirkstoffe werden hier, beispielsweise in Form von Granulaten, direkt in das Anstauwasser gegeben. Nach der Behandlung werden die Töpfe im Gewächshaus aufgestellt und unter guten Wachstumsbedingungen für die Unkräuter gehalten. Die optische Bonitur der Pflanzen- bzw. Auflaufschäden erfolgt nach dem Auflaufen der Versuchspflanzen nach einer Versuchszeit von 3 bis 4 Wochen im Vergleich zu unbehandelten Kontrollen. Wie die Testergebnisse zeigen, weisen die erfindungsgemäßen Mittel eine hervorragende herbizide Vorauflaufwirksamkeit gegen ein breites Spektrum von Ungräsem und Unkräutern auf. Dabei werden häufig Wirkungen der erfindungsgemäßen Kombinationen beobachtet, die die formale Summe der Wirkungen bei Einzelapplikation der Herbizide übertreffen. Die beobachteten Werte der Versuche zeigen bei geeigneten niedrigen Dosierungen eine Wirkung der Kombinationen, die über den Erwartungswerten nach Colby liegt.

Bonitur und Bewertung der synergistischen Herbizidwirkungen:

Die herbizide Wirksamkeit der Wirkstoffe bzw. Wirkstoffmischungen wurde anhand der behandelten Varianten im Vergleich zu unbehandelten Kontroll-Varianten visuell bonitiert. Dabei wurde Schädigung und Entwicklung aller oberirdischen Pflanzenteile erfaßt. Die Bonitierung erfolgte nach einer Prozentskala (100% Wirkung = alle Pflfanzen abgestorben; 50 % Wirkung = 50% der Pflanzen und grünen Pflanzenteile abgestorben; 0 % Wirkung = keine erkennbare Wirkung = wie unbehandelte Kontrollparzelle.

2. Unkrautwirkung im Nachauflauf

Samen bzw. Wurzelstücke von mono- und dikotylen Unkräutern werden in Töpfen in sandigem Lehmboden ausgelegt, mit Erde abgedeckt und im Gewächshaus unter guten Wachstumsbedingungen (Temperatur, Luftfeuchtigkeit, Wasserversorgung) angezogen. Etwa drei Wochen nach der Aussaat werden die Versuchspflanzen mit den erfindungsgemäßen Mitteln behandelt. Bei der Spritzapplikation werden die als Spritzpulver bzw. als Emulsionskonzentrate formulierten erfindungsgemäßen Mittel in verschiedenen Dosierungen mit einer Wasseraufwandmenge von umgerechnet 600 bis 800 l/ha auf die grünen Pflanzenteile gesprüht. Unmittelbar bis einige Tage nach der Applikation werden die Versuchsgefäße um bis zu 30mm über die Erdoberfläche mit Wasser angestaut. Bei der Wasserapplikation ("submerged application") hingegen ist die Erde im geschlossenen Versuchsgefäss zum Zeitpunkt der Applikation schon mit dem Anstauwasser bis zu 30mm bedeckt. Die formulierten Wirkstoffe werden hier direkt in das Anstauwasser gegeben. Nach weiteren 3 bis 4 Wochen Standzeit der Versuchspflanzen im Gewächshaus unter optimalen Wachstumsbedingungen wird die Wirkung der Präparate optisch im Vergleich zu unbehandelten Kontrollen bonitiert. Die erfindungsgemäßen Mittel weisen auch im Nachauflauf eine hervorragende herbizide Wirksamkeit gegen ein breites Spektrum wirtschaftlich wichtiger Ungräser und Unkräuter auf. Dabei werden häufig Wirkungen der erfindungsgemäßen Kombinationen beobachtet, die die formale Summe der Wirkungen bei Einzelapplikation der Herbizide übertreffen. Die beobachteten Werte der Versuche zeigen bei geeigneten niedrigen Dosierungen eine Wirkung der Kombinationen, die über den Erwartungswerten nach Colby liegt.

3. Herbizide Wirkung und Kulturpflanzenverträglichkeit (Feldversuche)

Kulturpflanzen wurden im Freiland auf Parzellen unter natürlichen Freilandbedingungen herangezogen, wobei Samen oder Wurzelstücke von typischen Schadpflanzen ausgelegt worden waren bzw. die natürliche Verunkrautung genutzt wurde. Die Behandlung mit den erfindungsgemäßen Mitteln erfolgte als Spritzapplikation bzw. als Wasserapplikation ("submerged application") nach dem Auflaufen der Schadpflanzen und der Kulturpflanzen in der Regel im 2 bis 4-Blattstadium; teilweise (wie angegeben) erfolgte die Applikation einzelner Wirkstoffe oder Wirkstoffkombinationen preemergent oder als Sequenzbehandlung teilweise preemergent und/oder postemergent. Nach der Anwendung, z. B. 2, 4, 6 und 8 Wochen nach Applikation wurde die Wirkung der Präparate optisch im Vergleich zu unbehandelten Kontrollen bonitiert (vgl. Bonitur in Beispiel 1). Die erfindungsgemäßen Mittel weisen auch im Feldversuch eine synergistische herbizide Wirksamkeit gegen ein breites Spektrum wirtschaftlich wichtiger Ungräser und Unkräuter auf. Der Vergleich zeigte, daß die erfindungsgemäßen Kombinationen meist mehr, teilweise erheblich mehr herbizide Wirkung aufweisen als die Summe der Wirkungen der Einzelherbizide und weist deshalb auf einen Synergismus hin. Außerdem lagen die Wirkungen in wesentlichen Abschnitten des Boniturzeitraums über den Erwartungswerten nach Colby und weisen deshalb ebenfalls auf einen Synergismus hin. Die Kulturpflanzen dagegen wurden infolge der Behandlungen mit den herbiziden Mitteln nicht oder nur unwesentlich geschädigt.

Bei der Anwendung der erfindungsgemäßen Kombinationen werden häufig herbizide Wirkungen an einer Schadpflanzenspezies beobachtet, die die formale Summe der Wirkungen der enthaltenen Herbizide bei alleiniger Applikation übertreffen. Alternativ ist kann in manchen Fällen beobachtet werden, daß eine geringere Aufwandmenge für die Herbizid-Kombination benötigt wird, um im Vergleich zu den Einzelpräparaten dieselbe Wirkung bei einer Schadpflanzenspezies zu erzielen. Derartige Wirkungssteigerungen bzw. Effektivitätssteigerungen oder Einsparungen an Aufwandmenge sind ein starker Hinweis auf synergistische Wirkung.

Wenn die beobachteten Wirkungswerte bereits die formale Summe der Werte zu den Versuchen mit Einzelapplikationen übertreffen, dann übertreffen sie den Erwartungswert nach Colby ebenfalls, der sich nach folgender Formel errechnet und ebenfalls als Hinweis auf Synergismus angesehen wird (vgl. S. R. Colby; in Weeds 15 (1967) S. 20 bis 22):

$$E = A + B - \frac{A \times B}{100}$$

Dabei bedeuten:

A, B =    Wirkung der Komponente A bzw.B in Prozent bei einer Dosierung von a bzw. b Gramm ai /ha.
E =    Erwartungswert in % bei einer Dosierung von a+b Gramm ai/ha.

Die beobachteten Werte der oben genannten Versuchsbeispiele liegen über den Erwartungswerten nach Colby.
Die Abkürzung IPOHE steht für die Schadpflanze Ipomoea hederacea.
In den Ausführungsbeispielen wurden tembotrione und amicarbazone (B1) verwendet:

Wirkung im Nachauflauf

| Verbindung | Dosierung [g/ha] | Wirkung gegen IPOHE | erwarteter Wert nach Colby |
|---|---|---|---|
| tembotrione | 50 | 40% | |
| B1 | 125 | 20% | |
| tembotrione + B1 | 50 + 125 | 75% | 52% |

**Patentansprüche**

1.    Herbizid-Kombinationen, **gekennzeichnet durch** einen synergistisch wirksamen Gehalt an

A) tembotrione sowie dessen landwirtschaftlich üblichen Salze [Komponente (A)] und
B) der Verbindung amicarbazone [Komponente (B)].

2.    Herbizide Mittel nach Anspruch 1, **dadurch gekennzeichnet, daß** das Gewichtsverhältnis A:B der kombinierten Herbizide (A) und (B) im Bereich von 1:50 bis 500:1 liegt.

3.    Herbizide Mittel nach Anspruch 1 oder 2, **dadurch gekennzeichnet daß** das Gewichtsverhältnis A:B der kombinierten Herbizide (A) und (B) im Bereich von 1:20 bis 50:1 liegt.

4.    Herbizide Mittel nach einem der Ansprüche 1 bis 3, **dadurch gekennzeichnet, daß** sie 0,1-99 Gew.-% Herbizide (A) und (B) und 99 bis 0,1 Gew.-% im Pflanzenschutz übliche Formulierungsmittel enthalten.

5.    Verfahren zur Bekämpfung von unerwünschtem Pflanzenwuchs, **dadurch gekennzeichnet, daß** man ein oder mehrere Herbizide (A) mit einem Herbizid (B) auf die Schadpflanzen, Pflanzenteile davon oder die Anbaufläche appliziert, wobei die Kombination der Herbzide (A) und (B) wie in einem der Ansprüche 1 bis 4 definiert ist.

6.    Verwendung einer Kombination aus Herbiziden (A) und (B) als herbizides Mittel zur Bekämpfung von unerwünschtem Pflanzenwuchs, wobei die Kombination der Herbizide (A) und (B) wie in einem der Ansprüche 1 bis 4 definiert ist.

**Claims**

1. A herbicidal combination, which comprises a synergistically effective content of

    A) tembotrione and the salts thereof which are standard in agriculture [component (A)]
    and
    B) the compound amicarbazone [component (B)].

2. A herbicidal composition as claimed in claim 1, wherein the weight ratio A:B of the combined herbicides (A) and (B) lies in the range from 1:50 to 500:1.

3. A herbicidal composition as claimed in claim 1 or 2, wherein the weight ratio A:B of the combined herbicides (A) and (B) lies in the range from 1:20 to 50:1.

4. A herbicidal composition as claimed in one of claims 1 to 3, which comprises 0.1-99% by weight of herbicides (A) and (B) and from 99 to 0.1% by weight of formulating agents standard in plant protection.

5. A process for combating undesirable plant growth, which comprises the application of one or more herbicides (A) with herbicide (B) to the harmful plants, plant parts thereof or the area under cultivation, the combination of the herbicides (A) and (B) being as defined in one of claims 1 to 4.

6. The use of a combination of herbicides (A) and (B) as herbicidal composition for combating undesirable plant growth, the combination of the herbicides (A) and (B) being as defined in one of claims 1 to 4.


**Revendications**

1. Associations d'herbicides, **caractérisées par** une teneur synergiquement efficace en

    A) tembotrione ainsi que ses sels usuels en agriculture [(composant (A)], et
    B) le composé amicarbazone [(composant (B)].

2. Compositions herbicides selon la revendication 1, **caractérisées en ce que** le rapport pondéral A:B des herbicides (A) et (B) associés se situe dans la plage allant de 1:50 à 500:1.

3. Compositions herbicides selon la revendication 1 ou 2, **caractérisées en ce que** le rapport pondéral A:B des herbicides (A) et (B) associés se situe dans la plage allant de 1:20 à 50:1.

4. Associations herbicides selon l'une quelconque des revendications 1 à 3, **caractérisées en ce qu'**elles contiennent 0,1-99 % en poids d'herbicides (A) et (B) et 99 à 0,1 % en poids d'agents de formulation usuels dans la protection des plantes.

5. Procédé pour la lutte contre la croissance indésirable de plantes, **caractérisé en ce qu'**on applique sur les plantes nuisibles, des parties de ces plantes ou l'aire de culture un ou plusieurs herbicides (A) avec un herbicide (B), l'association des herbicides (A) et (B) étant telle que définie dans l'une quelconque des revendications 1 à 4.

6. Utilisation d'une association d'herbicides (A) et (B) en tant que composition herbicide destinée à la lutte contre la croissance indésirable de plantes, l'association des herbicides (A) et (B) étant telle que définie dans l'une quelconque des revendications 1 à 4.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03047340 A
- WO 2007006415 A
- EP 1117639 B1


**In der Beschreibung aufgeführte Nicht-Patentliteratur**

- The Pesticide Manual. British Crop Protection Council, 2006
- Chemische Technologie. **WINNACKER-KÜCHLER.** Winnacker-Küchler. C. Hauser Verlag München, 1986, vol. 7
- **VAN VALKENBURG.** Pesticides Formulations. Marcel Dekker N.Y, 1973
- **K. MARTENS.** Spray Drying Handbook. G. Goodwin Ltd. London, 1979
- **WATKINS.** Handbook of Insecticide Dust Diluents and Carriers. Darland Books
- **H.V. OLPHEN.** Introduction to Clay Colloid Chemistry. J. Wiley & Sons
- **MARSDEN.** Solvents Guide. Interscience, 1950
- **MCCUTCHEON'S.** Detergents and Emulsifiers Annual. MC Publ. Corp,
- **SISLEY ; WOOD.** Encyclopedia of Surface Active Egents. Chem. Publ. Co. Inc, 1964
- **SCHÖNFELDT.** Grenzflächenaktive Äthylenoxidaddukte. Wiss. Verlagsgesellschaft, 1976
- **WINNACKER-KÜCHLER.** Chemische Technologie. C. Hauser Verlag München, 1986, vol. 7
- **S. R. COLBY.** *Weeds,* 1967, vol. 15, 20-22